# EUROPEAN PATENT SPECIFICATION

(11) **EP 4 530 789 B1**
(45) Date of publication and mention of the grant of the patent: **04.11.2026**
(21) Application number: 24199174.4
(22) Date of filing: 09.09.2024
(51) Int. Cl.: G05D 7/06, G05D 16/20

(54) **DYNAMIC CONTROL OF FLUID PRESSURE AT MOVABLE USAGE POINTS WITHIN A FLUID FLOW CIRCUIT**
DYNAMISCHE STEUERUNG DES FLÜSSIGKEITSDRUCKS AN BEWEGBAREN VERBRAUCHSPUNKTEN IN EINEM FLÜSSIGKEITSSTROMKREIS
COMMANDE DYNAMIQUE DE PRESSION À DES POINTS D'UTILISATION MOBILES D'UN FLUIDE DANS UN CIRCUIT

(30) Priority: 28.09.2023 US 202318477238
(43) Date of publication of application: 02.04.2025
(73) Proprietor: The Boeing Company, Arlington, VA 22202 (US)
(72) Inventor: MELLIN, Matthew H., Arlington, VA, 22202 (US); KING, Travis, Arlington, VA, 22202 (US); CASTLEBERRY, Jesse, Arlington, VA, 22202 (US); CHRISTNER, Matt, Arlington, VA, 22202 (US)
(74) Representative: Hoffmann Eitle

(56) References cited:
- CN-A- 111 746 124
- CN-B- 109 664 618

## Description

### FIELD

This disclosure relates generally to a fluid flow circuit, and more particularly to dynamically controlling fluid pressure of a fluid management device.

### BACKGROUND

Fluid flow circuits, such as those used in inkjet printing systems, typically include pressure-controlled devices to control pressures within the circuit. However, controlling pressure within a fluid flow circuit used on a complex, three-dimensional surface, can be difficult because the orientation and location (e.g., height) of the pressure-controlled device can change relative to a fluid source during operation.

Existing methods to control pressure at a controlled point within a fluid flow circuit have employed two centrally-located pumps for pressure regulation at a single-point flow impedance. However, such conventional approaches lack flexibility for managing pressure and fluid flow at more than one point, as well as creates stability issues, because the pumps are a relatively far distance from the controlled point. Other approaches involve numerous centrallyplaced pressure actuators linked through tubes to translate each controlled pressure to its desired location. These alternative approaches may be suitable for high-pressure scenarios or lowdensity fluid systems, but are inadequate for low-pressure systems with high-density fluids where hydraulic head cannot be neglected, such as inkjet printing systems.

CN 111746124 A, according to its abstract, states a circulating ink supply system. The circulating ink supply system comprises an ink supply pipeline and an ink return pipeline, and circulating ink supply is completed through an ink barrel, an ink-jet printing head set, a proportional valve set, an ink supply pressure generating device and an ink return pressure generating device. By controlling the pressure at the two ends of a printing head and the ink supply proportion, so that the pressure on a nozzle plate on the printing head is stable, stable work of the printing head is guaranteed. An ink supply pump may be used to introduce the ink in the ink tank into the ink supply pipeline and maintain the ink supply pipeline within the set pressure range. An ink return pump may be used to output the ink in the ink return pipeline to the ink tank and maintain the ink pipeline in the set pressure range.
CN 109664618 B, according to its abstract, states an ink supply control system, a printing press and an ink supply control method. Among them, the ink supply control system includes: at least one ink inlet solenoid valve, which is arranged between the ink inlet cavity and the nozzle; at least one ink return solenoid valve, which is arranged between the ink return cavity and the nozzle; a control device; the control device is electrically connected to the at least one ink inlet solenoid valve and the at least one ink return solenoid valve, and is used to control the working status of the at least one ink inlet solenoid valve and the at least one ink return solenoid valve according to different working instructions. The ink supply control system may include an ink supply pump and an ink return pump.

### SUMMARY

The subject matter of the present application has been developed in response to the present state of the art, and in particular, in response to the problems of and needs created by, or not yet fully solved by, fluid flow circuits for fluid management systems. Generally, the subject matter of the present application has been developed to provide a fluid flow circuit that overcomes at least some of the above-discussed shortcomings of prior art techniques. The system herein provides for high precision, low-range control of more than one independent pressure points fed by a centralized fluid circulation system. The resulting control performance provides for higher bandwidth and precision control as compared to known methods of low range incompressible fluid pressure control systems. The system may be used in inkjet printing on flat or curved surfaces, and in embodiments, inkjet printing of curved surfaces on transportation apparatuses such as airplanes, boats, automobiles, and the like.

Disclosed herein is a system for dynamic control of fluid pressure within a fluid flow circuit as recited in claim 1. The system includes an inlet line and an outlet line. The system also includes a fluid circulation system configured to supply a working fluid through the inlet line and return returned working fluid through the outlet line. The system further includes a fluid management device fluidically coupled to the inlet line and the outlet line. The fluid management device defines a pressure-controlled point and the fluid management device is selectively movable, relative to the fluid circulation system. The system also includes a first proportional valve disposed in the inlet line and configured to selectively modulate an inlet fluid pressure in the inlet line between the first proportional valve and the fluid management device. The system further includes a first pressure sensor between the first proportional valve and the fluid management device and configured to measure the inlet fluid pressure in the inlet line. The system also includes a second proportional valve disposed in the outlet line and configured to selectively modulate an outlet fluid pressure in the outlet line between the fluid management device and the second proportional valve. The system further includes a second pressure sensor between the fluid management device and the second proportional valve and configured to measure the outlet fluid pressure in the outlet line. Additionally, the system includes a controller operably coupled to the first proportional valve, the first pressure sensor, the second proportional valve, and the second pressure sensor. The controller is configured to control the first proportional valve so that the inlet fluid pressure is maintained at a target inlet fluid pressure and control the second proportional valve so that the outlet fluid pressure is maintained at a target outlet fluid pressure. The preceding subject matter of this paragraph characterizes example 1 of the present disclosure.

The first proportional valve and the second proportional valve are actuatable independently of each other. The preceding subject matter of this paragraph characterizes example 2 of the present disclosure, wherein example 2 also includes the subject matter according to example 1, above.

Each one of the first proportional valve and the second proportional valve is a direct-acting proportional valve. The preceding subject matter of this paragraph characterizes example 3 of the present disclosure, wherein example 3 also includes the subject matter according to any of examples 1-2, above.

A fluid pressure within the fluid flow circuit is no more than 50 pounds per square inch (PSI). The preceding subject matter of this paragraph characterizes example 4 of the present disclosure, wherein example 4 also includes the subject matter according to any of examples 1-3, above.

The system is configured to automatically compensate for inertial effects and hydraulic head. The preceding subject matter of this paragraph characterizes example 5 of the present disclosure, wherein example 5 also includes the subject matter according to any of examples 1-4, above.

The working fluid is an incompressible fluid. The preceding subject matter of this paragraph characterizes example 6 of the present disclosure, wherein example 6 also includes the subject matter according to any of examples 1-5, above.

The fluid management device includes at least one nozzle fluidically coupled to the inlet line and the outlet line and configured to dispense the working fluid. The preceding subject matter of this paragraph characterizes example 7 of the present disclosure, wherein example 7 also includes the subject matter according to any of examples 1-6, above.

The working fluid in an ink. The fluid management device is a printhead configured to dispense the ink. The preceding subject matter of this paragraph characterizes example 8 of the present disclosure, wherein example 8 also includes the subject matter according to example 7, above.

The fluid circulation system includes a pump that is selectively operable to supply the working fluid to the inlet line and return returned working fluid from the outlet line. The preceding subject matter of this paragraph characterizes example 9 of the present disclosure, wherein example 9 also includes the subject matter according to any of examples 1-8, above.

The fluid circulation system includes a supply reservoir for supplying the working fluid and a return reservoir for storing returned working fluid. The preceding subject matter of this paragraph characterizes example 10 of the present disclosure, wherein example 10 also includes the subject matter according to any of examples 1-9, above.

The system includes a plurality of fluid management devices, a plurality of inlet lines, a plurality of outlet lines, a plurality of first proportional valves, a plurality of second proportional valves, a plurality of pressure-controlled points, a plurality of first pressure sensors, and a plurality of second pressure sensors. Each one of the plurality of fluid management devices is coupled to a corresponding one of the plurality of inlet lines and a corresponding one of the plurality of outlet lines. Each one of the plurality of fluid management devices defines a corresponding one of the plurality of pressure-controlled points and each one of the pressure-controlled points is different than any other one of the pressure-controlled points. Each one of the first proportional valves is disposed in a corresponding one of the plurality of inlet lines and each one of the plurality of first pressure sensors is between a corresponding one of the plurality of first proportional valves and a corresponding one of the plurality of fluid management devices. Each one of the second proportional valves is disposed in a corresponding one of the plurality of outlet lines and each one of the plurality of second pressure sensors is between a corresponding one of the plurality of fluid management devices and a corresponding one of the plurality of second proportional valves. The preceding subject matter of this paragraph characterizes example 11 of the present disclosure, wherein example 11 also includes the subject matter according to any of examples 1-10, above.

The plurality of fluid management devices are independently and selectively movable relative to the fluid circulation system. The preceding subject matter of this paragraph characterizes example 12 of the present disclosure, wherein example 12 also includes the subject matter according to example 11, above.

The first proportional valve is configured to modulate the inlet fluid pressure based on feedback from the first pressure sensor. The second proportional valve is configured to modulate the outlet fluid pressure based on feedback from the second pressure sensor. The preceding subject matter of this paragraph characterizes example 13 of the present disclosure, wherein example 13 also includes the subject matter according to any of examples 1-12, above.

The controller adjusts the first proportional valve and the second proportional valve to maintain a desired average fluid pressure and a desired fluid flow rate, between the inlet fluid pressure and the outlet fluid pressure, of the working fluid at the fluid management device. The preceding subject matter of this paragraph characterizes example 14 of the present disclosure, wherein example 14 also includes the subject matter according to any of examples 1-13, above.

The first proportional valve is disposed in the inlet line immediately adjacent to the fluid management device. The second proportional valve is disposed in the outlet line immediately adjacent to the fluid management device. The preceding subject matter of this paragraph characterizes example 15 of the present disclosure, wherein example 15 also includes the subject matter according to any of examples 1-14, above.

Also disclosed herein is a system of the kind recited above that is incorporated as an inkjet printing system. The inkjet printing system includes the inlet line and the outlet line. The inkjet printing system also includes an ink circulation system as the the fluid circulation system, configured to supply ink through the inlet line and return undispensed ink through the outlet line. The fluid management device of the inkjet printing system further includes a printhead including at least one nozzle fluidically coupled to the inlet line and the outlet line and configured to dispense ink. The printhead defines a pressure-controlled point and is selectively movable, relative to the ink circulation system. The inkjet printing system also includes the first proportional valve disposed in the inlet line and configured to selectively modulate an inlet fluid pressure in the inlet line between the first proportional valve and the at least one nozzle. The inkjet printing system further includes the first pressure sensor between the first proportional valve and the printhead and configured to measure the inlet fluid pressure in the inlet line. The inkjet printing system also includes the second proportional valve disposed in the outlet line and configured to selectively modulate an outlet fluid pressure in the outlet line between the at least one nozzle and the second proportional valve. The inkjet printing system further includes the second pressure sensor between the printhead and the second proportional valve and configured to measure the outlet fluid pressure in the outlet line. Additionally, the inkjet printing system includes the controller operably coupled to the first proportional valve, the first pressure sensor, the second proportional valve, the second pressure sensor, and the printhead. The controller is configured to control the first proportional valve so that the inlet fluid pressure is maintained at a target inlet fluid pressure and control the second proportional valve so that the outlet fluid pressure is maintained at a target outlet fluid pressure. The controller is configured to control the at least one nozzle to selectively dispense ink onto a surface. The preceding subject matter of this paragraph characterizes example 16 of the present disclosure.

The first proportional valve is disposed in the inlet line immediately adjacent to the printhead. The second proportional valve is disposed in the outlet line immediately adjacent to the printhead. The preceding subject matter of this paragraph characterizes example 17 of the present disclosure, wherein example 17 also includes the subject matter according to example 16, above.

The first proportional valve and the second proportional valve are actuatable independently of each other. The preceding subject matter of this paragraph characterizes example 18 of the present disclosure, wherein example 18 also includes the subject matter according to any of examples 16-17, above.

The printhead is a piezoelectric-style printhead. The preceding subject matter of this paragraph characterizes example 19 of the present disclosure, wherein example 19 also includes the subject matter according to any of examples 16-18, above.

Further discloses within is a method for dynamically controlling fluid pressure within a fluid flow circuit. The method includes determining a target inlet fluid pressure in an inlet line supplying a working fluid to a fluid management device. The method also includes determining a target outlet fluid pressure in an outlet line returning working fluid from the fluid management device based on a desired average fluid pressure of the working fluid at the fluid management device and a desired pressure differential at the fluid management device. The method further includes controlling an inlet fluid pressure to maintain the target inlet fluid pressure by actuating a first proportional valve. The inlet fluid pressure is measured by a first pressure sensor. The method additionally includes controlling an outlet fluid pressure to maintain the target outlet fluid pressure by actuating a second proportional valve. The outlet fluid pressure is measured by a second pressure sensor. The preceding subject matter of this paragraph characterizes example 20 of the present disclosure.

The described features, structures, advantages, and/or characteristics of the subject matter of the present disclosure may be combined in any suitable manner in one or more examples, including embodiments and/or implementations. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example, embodiment, or implementation. In other instances, additional features and advantages may be recognized in certain examples, embodiments, and/or implementations that may not be present in all examples, embodiments, or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims, or may be learned by the practice of the subject matter as set forth hereinafter.

### BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings depict only typical examples of the subject matter, they are not therefore to be considered to be limiting of its scope. The subject matter will be described and explained with additional specificity and detail through the use of the drawings, in which:
Figure 1 is a schematic view of a fluid flow circuit for a fluid management system, according to one or more examples of the present disclosure;
Figure 2 is a schematic view of another example of a fluid flow circuit for a fluid management system, according to one or more examples of the present disclosure;
Figure 3 is a schematic view of an inkjet printing system, according to one or more examples of the present disclosure; and
Figure 4 is a schematic flow diagram of a method of dynamically controlling fluid pressure within a fluid flow circuit, according to one or more examples of the present disclosure.

### DETAILED DESCRIPTION

Reference throughout this specification to "one example," "an example," or similar language means that a particular feature, structure, or characteristic described in connection with the example is included in at least one example of the subject matter of the present disclosure. Appearances of the phrases "in one example," "in an example," and similar language throughout this specification may, but do not necessarily, all refer to the same example. Similarly, the use of the term "implementation" means an implementation having a particular feature, structure, or characteristic described in connection with one or more examples of the subject matter of the present disclosure, however, absent an express correlation to indicate otherwise, an implementation may be associated with one or more examples.

Disclosed herein are examples of a fluid flow circuit for a fluid pressure-controlled system. The following provides some features of at least some examples of a fluid flow circuit. The fluid flow circuit may, in some examples, form part of a pressure-controlled fluid system requiring precise control over the pressure of a low-pressure fluid within a fluid management device. In other examples, the fluid flow circuit may, form part of a fluid management device dispenses a working fluid. For example, the fluid flow circuit may from part of an inkjet printing system configured to dispense ink onto a surface. References to an inkjet printing system throughout are solely intended to exemplify one application of a dynamic fluidpressure control system of the fluid flow circuit. The systems and methods disclosed herein are particularly suited for use in complex, three-dimensional applications, where an orientation of a fluid management device of a fluid flow circuit may change during operation. For example, an inkjet printing system for printing on a three-dimensional surface, such as a surface of an aircraft, is disclosed. The fluid flow circuit includes a fluid management device having a nozzle from which a working fluid (e.g., ink) is dispensed. The systems and methods disclosed herein dynamically manage both an inlet fluid pressure upstream of the fluid management device and an outlet fluid pressure downstream of the fluid management device. The inlet fluid pressure and the outlet fluid pressure are regulated to ensure that a target fluid pressure is consistently maintained at the nozzle, regardless of an orientation of the fluid management device.

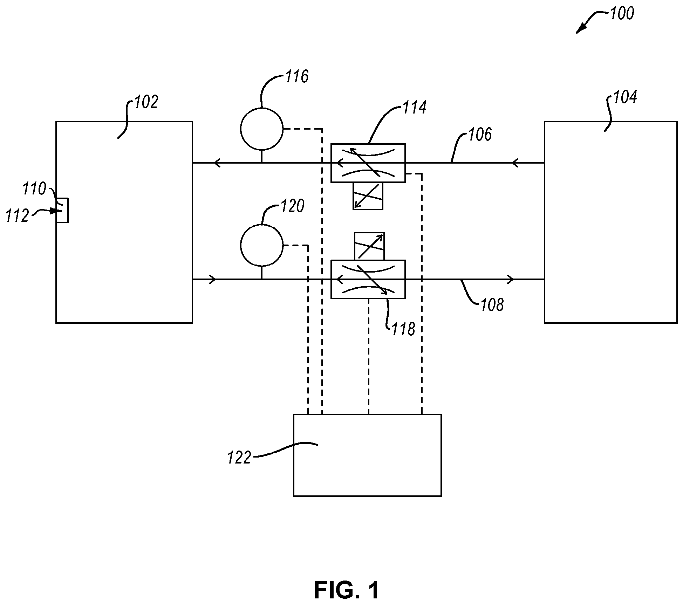

Referring to Figure 1, a system 100 includes a fluid management device 102. In some examples, the fluid management device 102 is coupled to a structure, not shown, that allows the fluid management device 102 to selectively translationally move in at least one direction (e.g., forward/backward, left/right, or up/down) and rotate in at least one degree of freedom (e.g., pitch, yaw, and roll). In some examples, the fluid management device 102 is supported by the structure for rotation in three degrees of freedom, such as about an X, Y, and Z axes of a standard coordinate system. The structure can be an industrial multi-axis robotic arm in some examples.

The fluid management device 102 is configured to have a working fluid flow through the fluid management device 102. In some examples, the fluid management device 102 is configured to dispense working fluid from the fluid management device 102. Accordingly, in some examples, the fluid management device 102 includes at least one nozzle 110, through which a working fluid is dispensed. As used herein, a working fluid includes any incompressible fluid, (i.e., fluid that is relatively resistant to changes in volume when subjected to pressure) that is dispensable from the fluid management device 102. For example, the working fluid may be water or a water-based fluid, oil or an oil-based fluid, hydraulic fluids, ink, etc. In some examples, the fluid management device 102 may include a plurality of nozzles 110. For example, the fluid management device 102 may have up to one hundred nozzles that are configured to dispense the working fluid. In other examples, the fluid management device 102 may have up to one thousand nozzles that are configured to dispense the working fluid. The plurality of nozzles may be configured to dispense the working fluid simultaneously and uniformly relative to each other. Alternatively, one or more of the plurality of nozzles may be configured to be independently controlled, relative to one or more other ones of the plurality of nozzles, such that one or more of the nozzles can dispense fluid at a different time or a different rate relative to other ones of the nozzles.

In other examples, the fluid management device 102 does not dispense a working fluid from the fluid management device 102, and therefore does not have a nozzle, but does precisely control the pressure of the working fluid within the fluid management device 102. For example, the fluid management device 102 may be a pressure-based haptic device. That is, a pressure-based haptic device configured to use changes in fluid pressure to control force feedback experienced by a user. Such devices have practical applications in different fields such as robotic-assisted manufacturing, virtual and augmented reality environments, and remote telepresence systems.

The fluid management device 102 defines a pressure-controlled point 112 where the pressure is controlled. In the case of a fluid management device 102 including a nozzle 110, the pressure-controlled point 112 is defined at each one of one or more nozzles 110 of the fluid management device 102, such that the pressure at the at least one nozzle 110 is controlled. As used herein, a pressure-controlled point refers to a specific location within a system or device where the pressure of a fluid is actively and independently regulated or controlled. This point serves as a reference or focus for pressure management, ensuring that the pressure at this particular location remains consistent and can be adjusted as needed, separate from other points within the system. A given system can have a single pressure-controlled point 112 or multiple pressure-controlled points. Because the pressure-controlled point 112 is defined by the fluid management device 102, each nozzle 110 of a fluid management device 102 having a plurality of nozzles 110, would have the same pressure-controlled point 112. Accordingly, the pressure at each nozzle 110, of a fluid management device 102 having a plurality of nozzles 110, remains consistent and controlled.

The system 100 also includes a fluid circulation system 104 that is configured to circulate the working fluid through the fluid management device 102. That is, the fluid circulation system 104 is configured to supply the working fluid in a continuous and controlled flow to and from the fluid management device 102. The system 100 includes an inlet line 106, which serves as the entry point of the working fluid into the fluid management device 102 and fluidically couples the fluid circulation system 104 to the fluid management device 102 to supply the working fluid from the fluid circulation system 104. Similarly, the system 100 includes an outlet line 108, which serves as the return path of the working fluid, independent of the inlet line 106, and fluidically couples the fluid circulation system 104 to the fluid management device 102 to return the working fluid to the fluid management device 102. In some examples, the returned working fluid is the undispensed working fluid that is not dispensed from the nozzle 110 of the fluid management device 102. In view of the foregoing, the inlet line 106 and the outlet line 108 of the system 100 are fluidically coupled to the at least one nozzle 110 of the fluid management device 102.

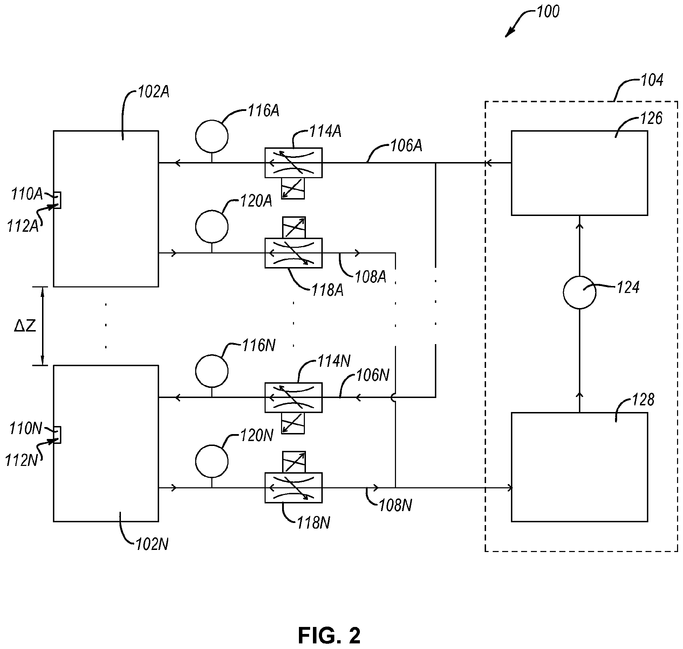

As shown in Figure 2, the fluid circulation system 104 includes a pump 124 that is selectively operable to supply the working fluid to the inlet line 106 and return the working fluid from the outlet line 108. Additionally, in some examples, the fluid circulation system 104 includes a supply reservoir 126 for supplying the working fluid to the inlet line 106 and a return reservoir 128 for storing the returned working fluid. In some examples, the pump 124 is configured to be between the return reservoir 128 and the supply reservoir 126 to move the working fluid from the return reservoir 128 to the supply reservoir 126, allowing the returned working fluid to be recirculated through the fluid circulation system 104.

The system 100 further includes proportional values to dynamically control the fluid pressure at the fluid management device 102. That is, and referring back to Figure 1, the pressure-controlled point 112 of the fluid management device 102 is controlled through the use of dual proportional valves, with one disposed in the inlet line 106 and one disposed in the outlet line 108. A first proportional valve 114 is disposed in the inlet line 106 and is configured to selectively modulate an inlet fluid pressure in the inlet line 106 between the first proportional valve 114 and the nozzle 110. Similarly, a second proportional valve 118 is disposed in the outlet line 108 and is configured to selectively modulate an outlet fluid pressure in the outlet line 108 between the nozzle and the second proportional valve 118. The first proportional valve 114 and the second proportional valve 118 are valves used to precisely regulate a fluid flow rate (i.e., fluid differential) and average fluid pressure of the working fluid. In some examples, the first proportional valve 114 and the second proportional valve 118 operate by varying the valve opening in proportion to an applied electrical or electronic control signal. That is, the first proportional valve 114 and the second proportional valve 118 can provide fine-tuned control over the fluid flow rate and the average fluid pressure at a level that is directly proportional to an input signal received from a controller, as described below. Accordingly, it will be appreciated that the first proportional valve 114 and the second proportional valve 118, being operable to generate an average fluid pressure and a fluid flow rate at the fluid management device 102, can control the fluid pressure at the nozzle 110. Moreover, the fluid management device 102 includes an internal fluid passage, not shown, that fluidically links the inlet line 106 and the outlet line 108 to the nozzle 110, such that the inlet line 106 and the outlet line 108 are directly linked to the nozzle 110.

The first proportional valve 114 and the second proportional valve 118 are actuatable independently of each other. That is, the control or adjustment of one valve does not affect the control or adjustment of the other valve, as each valve is separately controllable. For example, the inlet fluid pressure can be increased or decreased by the first proportional valve 114 while keeping the outlet fluid pressure constant, or vice versa. This flexibility allows for fine-tuned control of the fluid flow rate and average fluid pressure at the fluid management device 102. Additionally, the first proportional valve 114 and the second proportional valve 118 are direct-acting proportional valves. In other words, each proportional valve is directly controlled by an input signal it received from a controller, allowing the valve's position or opening to adjust immediately in response from the input signal. Accordingly, the first proportional valve 114 and the second proportional valve 118 are directly actuated by the controller with no amplification or intermediary mechanism involved in the valve's response to the signals. As such, the first proportional valve 114 and the second proportional valve 118 respond directly and proportionally to input signals received from a controller. When the input signal changes, the valves adjust their positions or opening precisely to achieve the desired fluid flow rate or average fluid pressure, allowing for fine-tuning control in the system 100. In this manner, the first proportional valve 114 and the second proportional valve 118 allow for high control performance of the working fluid. Unlike systems relying on pumps, which regulate fluid pressure by adjusting flow through a fixed opening (i.e., fixed impedance), the first proportional valve 114 and the second proportional valve 118 achieve precise control by modulating the flow impedance through the valves (i.e., variable impedance). That is, by directing modulating the flow impedance through the valves, the fluid pressure and flow rate of the system 100 can be adjusted.

The first proportional valve 114 is disposed in the inlet line 106 immediately adjacent to the fluid management device 102. Similarly, the second proportional valve 118 is disposed in the outlet line 108 immediately adjacent to the fluid management device 102. This allows for the working fluid flowing though the inlet line 106 and the outlet line 108 to be modulated as close as possible to the fluid management device 102, decreasing the distance the working fluid has to travel between the nozzle 110 and the proportional valves. By disposing the first proportional valve 114 and the second proportional valve 118 immediately adjacent to the fluid management device 102, there is minimal working fluid between the pressure-controlled point 112 and the valves. Consequently, this minimization curtails the impact of inertial effects on fluid pressure originating from machine motion or other external disturbances. Control performance of the system 100 improves the closer the proportional valves (and the pressure sensors, discussed below) are to the fluid management device 102.

In some examples, as used herein, the proportional valves are immediately adjacent the structure of the fluid management device 102 when the proportional valves are as close to the structure of the fluid management device 102 as possible without obstructing the function, assembly, and/or installation of the proportional valves, the fluid management device 102, or the pressure sensors, as explained below. In some examples, the first proportional valve 114 and the second proportional valve 118 are within 300 mm of the structure of the fluid management device 102. In other examples, the first proportional valve 114 and the second proportional valve 118 are between 150 mm and 300 mm of the structure of the fluid management device 102. Conversely, pumps, from systems relying on pumps for regulating fluid pressure cannot be placed as close to a fluid management device, as proportional valves, due to practical challenges that arise when using pumps to regulate fluid pressure. Typically, pumps used for regulating fluid pressure require pulse dampers to smooth out the pressure fluctuations in the working fluid as it enters or exits the pump. These pulse dampers tend to be relatively large and contain significant mass of working fluid, adding to the amount of working fluid between the pump and the pressure-controlled point, and often fail to completely eliminate fluid pressure pulses. Consequently, using pumps to regulate fluid pressure, not only increases part count of the system, due to the additional pulse dampers, but control performance also suffers as pumps lack the responsiveness of proportional valves.

The system 100 further includes a first pressure sensor 116, between the first proportional valve 114 and the fluid management device 102, for determining actual pressures of the working fluid in the inlet line 106. The first pressure sensor 116 is configured to generate an inlet line pressure signal indicative of an actual pressure of the working fluid supplied to the nozzle 110 through the inlet line 106. The first proportional valve 114 is configured to modulate the inlet fluid pressure based on feedback from the first pressure sensor 116. Likewise, the system 100 includes a second pressure sensor 120, between the fluid management device 102 and the second proportional valve 118, for determining actual pressures of the working fluid in the outlet line 108. The second pressure sensor 120 is configured to generate an outlet line pressure signal indicative of an actual pressure of the working fluid removed from the nozzle 110 through the outlet line 108. The second proportional valve 118 is configured to modulate the outlet fluid pressure based on feedback from the second pressure sensor 120.

The system 100 also includes a controller 122 operably coupled to the first proportional valve 114, the first pressure sensor 116, the second proportional valve 118, and the second pressure sensor 120. The controller 122 is configured to control the first proportional valve 114 so that the inlet fluid pressure is maintained at a target inlet fluid pressure and control the second proportional valve 118 so that the outlet fluid pressure is maintained at a target outlet fluid pressure. The controller 122 may be representative of any kind of computing device of controller, or may be a portion of another apparatus as well, such as an apparatus included entirely within a server, and portions of the controller 122 may be elsewhere or located within other computing devices. More specifically, the controller 122 includes a processor that may execute logic store in data storage to control the operations of the controller 122. In some examples, the controller 122 is configured to send an electronic control signal to the first proportional valve 114 of the second proportional valve 118 to control actuation of the valves.

The controller 122 is programmed to dynamically control a desired average fluid pressure (e.g., meniscus pressure) at the nozzle 110 of the fluid management device 102. That is, the controller 122 sends signals for adjustment of the first proportional valve 114 and the second proportional valve 118 to maintain the desired average fluid pressure, between the inlet fluid pressure and the outlet fluid pressure, of the working fluid at the nozzle 110. Accordingly, the controller 122 is configured to maintain the average fluid pressure of the working fluid in a condition such that it does not exceed the surface tension at the nozzle 110 and cause either air to be pulled into the nozzle 110 or working fluid to be uncontrollably dispensed from the nozzle 110. Additionally, the controller 122 is also programmed to dynamically control a pressure differential (i.e., fluid flow rate) between the inlet fluid pressure and the outlet fluid pressure. In some examples, the controller 122 may determine a target inlet fluid pressure and a target outlet fluid pressure to maintain a target pressure differential at the nozzle 110. The controller 122 may control the first proportional valve 114 and the second proportional valve 118 to obtain the target inlet fluid pressure and the target outlet fluid pressure, respectively, to provide the target pressure differential at the nozzle 110 regardless of the orientation of the fluid management device 102. Importantly, this configuration ensures reliable performance even when the system's orientation changes, achieved by dynamically calculating and compensating for the hydraulic head between the first pressure sensor 116 and the second pressure sensor 120 and the pressure-controlled point 112 when calculating the inlet fluid pressure and the outlet fluid pressure, respectively.

The controller 122 is further programmed to control the first proportional valve 114 based on the inlet line pressure signal from the first pressure sensor 116, and the second proportional valve 118 based on the outlet line pressure signal from the second pressure sensor 120. In some examples, the target pressure differential is within a range of approximately +2 millibar to -2 millibar. In other examples, the target pressure differential is within a range of approximately +1 millibar to -1 millibar. Additionally, the controller 122 is used, at least in part, to maintain the fluid pressure within the fluid flow circuit at no more than 50 pounds per square inch (PSI).

The controller 122 is configured to automatically compensate for inertial effects (i.e., the resistance of the working fluid due to the change of its state of motion) by making adjustments to the first proportional valve 114 and/or the second proportional valve 118 to account for the inertial effects. Similarly, the controller 122 is configured to automatically compensate for the hydraulic head, that is, the pressure exerted by the working fluid due to its elevation relative to a reference point, by making adjustments to the first proportional valve 114 and/or the second proportional valve 118 to account for variations in fluid pressure due to changes in the working fluid height or elevation, based on a reference point. Accordingly, the controller 122 can automatically compensate to account for changes in fluid motion and/or changes in fluid pressure due to difference in elevation to maintain precise control over fluid flow and fluid pressure even when the fluid motion or fluid height is changed.

In practice, the fluid management device 102, as shown in Figure 1, receives a working fluid from the fluid circulation system 104 and selectively dispenses the working fluid from the at least one nozzle 110 onto a surface. The nozzle 110 defines a desired average fluid pressure at which working fluid is present in the nozzle 110 to accurately dispense the working fluid to the surface.

Referring to Figure 2, in some examples, the system 100 has a plurality of fluid management devices 102, such as fluid management device 102A, having a nozzle 110A, up to fluid management device 102N, having a nozzle 110N. The system 100 is not limited to the two fluid management devices shown, and may include any number of fluid management devices (as indicated by the vertical dots extending between the illustrated components). Accordingly, the system 100 can be used for high precision, low-range control of more than one independent pressure point fed by a centralized fluid circulation system 104. That is, each fluid management device 102A-102N has an independent pressure point that is controlled by corresponding proportional valves and pressure sensors. The system 100 is capable of controlling pressures at many difference locations to different fluid management devices 102A-102N and automatically compensate for inertial effects and hydraulic head.

Each one of the plurality of fluid management devices 102A-102N is coupled to a corresponding one of a plurality of inlet lines 106A-106N and a corresponding one of a plurality of outlet lines 108A-108N. Additionally, each one of the plurality of inlet lines 106A-106N and the outlet lines 108A-108N has a corresponding one of proportional valves 114A-114N and proportional valves 118A-118N, and a corresponding one of pressure sensors 116A-116N. For example, the fluid management device 102A is coupled to inlet line 106A, having a first proportional valve 114A and a first pressure sensor 116A, and outlet line 108A, having a second proportional valve 118A and a second pressure sensor 120A. Likewise, the fluid management device 102N is coupled to inlet line 106N, having a first proportional valve 114N and a first pressure sensor 116N, and outlet line 108N, having a second proportional valve 118N and a second pressure sensor 120N. The fluid circulation system 104 is configured to supply the working fluid through the inlet lines 106A-106N and return the returned working fluid through the outlet lines 108A-108N. Accordingly, the working fluid supplied to the fluid management devices 102A-102N originates from the same source of working fluid (e.g., the fluid circulation system 104).

Each one of the plurality of fluid management devices 102A-102N defines a corresponding one of a plurality of pressure-controlled points 112A-112N associated with a plurality of nozzles 110A-110N. That is, each one of the fluid management devices 102A-102N defines a pressure-controlled point that is different from any other pressure-controlled point of others of the fluid management devices 102A-102N. Accordingly, each one of the fluid management devices 102A-102N is independently and selectively movable relative to the fluid circulation system 104. At least one of the fluid management devices 102A-102N is configured to be spaced at a vertical distance apart from at least another one of the fluid management devices 102A-102N during operation of the system 100. Accordingly, the controller 122 or multiple controllers (not shown) is configured to compensate for changes in elevation, such as hydraulic head, between fluid management devices as described above.

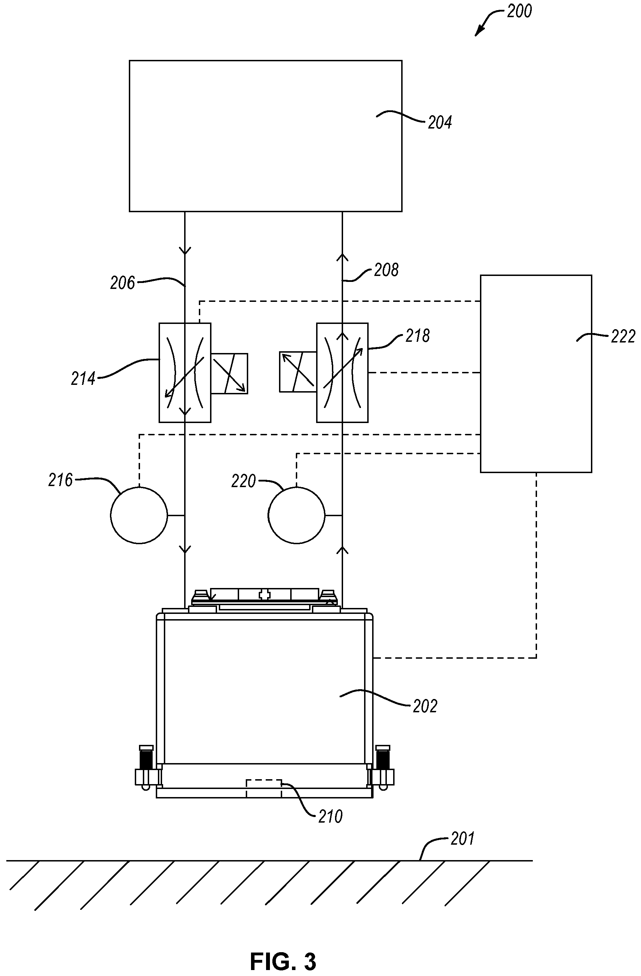

As shown in Figure 3, in some examples, the fluid management device of a system 200 is a printhead 202 configured to dispense ink on a surface 201. In some examples, the surface 201 is a three-dimensional surface of an aircraft and the printhead 202 is configured to dispense ink on the three-dimensional surface of the aircraft by being moved and/or rotated relative to the three-dimensional surface while printing on the three-dimensional surface. In some examples, the printhead 202 is a piezoelectrical-style printhead.

The ink circulation system 204 is configured to supply ink through the inlet line 206 and return undispensed ink through the outlet line 208. Ink in the ink circulation system 204 comprises ink of one color. That is, the at least one nozzle 210 of the printhead 202 is configured to dispense ink on the surface 201 having one color of ink from the ink circulation system 204. Accordingly, multiple colors of ink can be printed on the surface 201 using multiple printheads fluidically coupled to other ink circulation systems.

The ink circulation system 204 additionally includes a first proportional valve 214, a second proportional valve 218, a first pressure sensor 216, and a second pressure sensor 220, which are used to dynamically control an average fluid pressure (e.g., meniscus pressure) for the printhead 202, and a differential pressure at the nozzle 210, as described above. The ink circulation system 204 additionally includes a controller 222 that is operably coupled to the first proportional valve 214, the first pressure sensor 216, the second proportional valve 218, and the second pressure sensor 220 to maintain the inlet fluid pressure at a target inlet fluid pressure and the outlet fluid pressure at a target outlet fluid pressure. The controller 222 is further configured to control the at least one nozzle 210 to selectively dispense ink onto the surface 201.

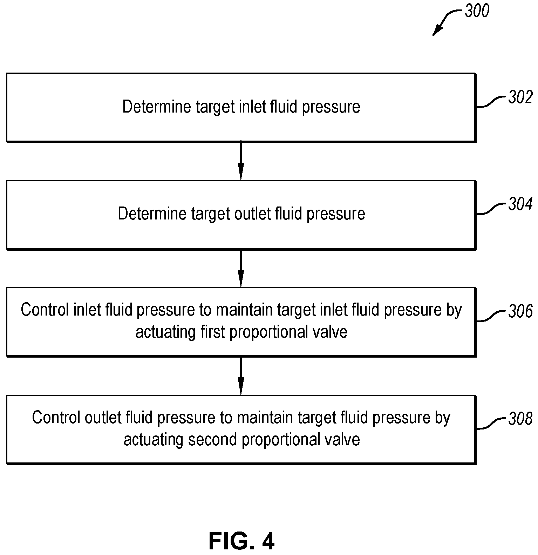

Referring to Figure 4, according to some examples, a method 300 for dynamically controlling fluid pressure within a fluid flow circuit is shown. The method 300 includes (block 302) determining a target inlet fluid pressure in an inlet line 106 supplying a working fluid to a fluid management device 102. In some examples, the fluid management device includes a nozzle 110 that is configured to dispense the working fluid. Additionally, in some examples, the working fluid is ink that is configured to be dispensed (i.e., printed) on a surface, such as an aircraft surface. The method 300 also includes (block 304) determining a target outlet fluid pressure in an outlet line 108 returning returned working fluid from the nozzle 110 based on a desired average pressure of the working fluid at the fluid management device 102 and a desired pressure differential (i.e., fluid flow rate) at the fluid management device 102. The method 300 further includes (block 306) controlling an inlet fluid pressure to maintain the target inlet fluid pressure by actuating a first proportional valve 114. The inlet fluid pressure is measured by a first pressure sensor 116 that is between the first proportional valve 114 and the fluid management device 102. The method 300 also includes (block 308) controlling an outlet fluid pressure to maintain the target outlet fluid pressure by actuating a second proportional valve 118. The outer fluid pressure is measured by a second pressure sensor 120 that is between the second proportional valve 118 and the fluid management device 102.

In the above description, certain terms may be used such as "up," "down," "upper," "lower," "horizontal," "vertical," "left," "right," "over," "under" and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two."

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The schematic flow chart diagrams included herein are generally set forth as logical flow chart diagrams. As such, the depicted order and labeled steps are indicative of one example of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

## Claims

1. A system (100, 200) for dynamic control of fluid pressure within a fluid flow circuit, the system comprising:
an inlet line (106, 206) and an outlet line (108, 208);
a fluid circulation system (104) configured to supply a working fluid through the inlet line (106, 206) and return returned working fluid through the outlet line (108, 208);
a fluid management device (102) wherein the fluid management device (102) defines a pressure-controlled point (112, 212) and wherein the fluid management device (102) is selectively movable, relative to the fluid circulation system (104);
a first proportional valve (114, 214) disposed in the inlet line (106, 206) and configured to selectively modulate an inlet fluid pressure in the inlet line (106, 206) between the first proportional valve (114, 214) and the fluid management device (102);
a first pressure sensor (116, 216) between the first proportional valve (114, 214) and the fluid management device (102) and configured to measure the inlet fluid pressure in the inlet line (106, 206);
a second proportional valve (118, 218) disposed in the outlet line (108, 208) and configured to selectively modulate an outlet fluid pressure in the outlet line (108, 208) between the fluid management device (102) and the second proportional valve (118, 218);
a second pressure sensor (120, 220) between the fluid management device (102) and the second proportional valve (118, 218) and configured to measure the outlet fluid pressure in the outlet line (108, 208); and
a controller (122, 222) operably coupled to the first proportional valve (114, 214), the first pressure sensor (116, 216), the second proportional valve (118, 218), and the second pressure sensor (120, 220), wherein the controller (122, 222) is configured to control the first proportional valve (114, 214) so that the inlet fluid pressure is maintained at a target inlet fluid pressure and control the second proportional valve (118, 218) so that the outlet fluid pressure is maintained at a target outlet fluid pressure,
wherein the fluid circulation system (104) further comprises a pump (124) that is selectively operable to both supply the working fluid to the inlet line (106, 206) and return returned working fluid from the outlet line (108, 208).

2. The system (100, 200) of claim 1, wherein each one of the first proportional valve (114, 214) and the second proportional valve (118, 218) is a direct-acting proportional valve.

3. The system (100, 200) of claim 1 or 2, wherein fluid pressure within the fluid flow circuit is no more than 50 pounds per square inch (PSI).

4. The system (100, 200) of any one of claims 1-3, wherein the system (100, 200) is configured to automatically compensate for inertial effects and hydraulic head.

5. The system (100, 200) of any one of claims 1-4, wherein the working fluid is an incompressible fluid.

6. The system (100, 200) of any one of claims 1-5, wherein the fluid management device (102) comprising at least one nozzle (110, 210) fluidically coupled to the inlet line (106, 206) and the outlet line (108, 208) and configured to dispense the working fluid.

7. The system (100, 200) of any one of claims 1-6, wherein
the working fluid is an ink; and
the fluid management device (102) comprises a printhead (202) configured to dispense the ink.

8. The system (100, 200) of any one of claims 1-7, wherein the fluid circulation system (104) further comprises a supply reservoir (126) for supplying the working fluid and a return reservoir (128) for storing returned working fluid.

9. The system (100, 200) of any one of claims 1-8, further comprising a plurality of fluid management devices (102), a plurality of inlet lines (106, 206), a plurality of outlet lines (108, 208), a plurality of first proportional valves (114, 214), a plurality of second proportional valves (118, 218), a plurality of pressure-controlled points (112, 212), a plurality of first pressure sensors (116, 216), and a plurality of second pressure sensors (120, 220), wherein:
each one of the plurality of fluid management devices (102) is coupled to a corresponding one of the plurality of inlet lines (106, 206) and a corresponding one of the plurality of outlet lines (108, 208);
each one of the plurality of fluid management devices (102) defines a corresponding one of the plurality of pressure-controlled points (112, 212) and each one of the pressure-controlled points (112, 212) is different than any other one of the pressure-controlled points (112, 212);
each one of the first proportional valves (114, 214) is disposed in a corresponding one of the plurality of inlet lines (106, 206) and each one of the plurality of first pressure sensors (116, 216) is between a corresponding one of the plurality of first proportional valves (114, 214) and a corresponding one of the plurality of fluid management devices (102); and
each one of the second proportional valves (118, 218) is disposed in a corresponding one of the plurality of outlet lines (108, 208) and each one of the plurality of second pressure sensors (120, 220) is between a corresponding one of the plurality of fluid management devices (102) and a corresponding one of the plurality of second proportional valves (118, 218).

10. The system (100, 200) of claim 9, wherein the plurality of fluid management devices (102) are independently and selectively movable relative to the fluid circulation system (104).

11. The system (100, 200) of any one of the preceding claims, wherein:
the first proportional valve (114, 214) is configured to modulate the inlet fluid pressure based on feedback from the first pressure sensor (116, 216); and
the second proportional valve (118, 218) is configured to modulate the outlet fluid pressure based on feedback from the second pressure sensor (120, 220).

12. The system (100, 200) of any one of the preceding claims, wherein the controller (122, 222) is configured to adjust the first proportional valve (114, 214) and the second proportional valve (118, 218) to maintain a desired average fluid pressure and a desired fluid flow rate, between the inlet fluid pressure and the outlet fluid pressure, of the working fluid at the fluid management device (102).

13. The system (100, 200) of any one of the preceding claims, wherein:
the first proportional valve (114, 214) is disposed in the inlet line (106, 206) immediately adjacent to the fluid management device (102); and
the second proportional valve (118, 218) is disposed in the outlet line (108, 208) immediately adjacent to the fluid management device (102).

14. The system of any one of the preceding claims, wherein the system is an inkjet printing system (200) comprising:
the inlet line (206) and the outlet line (208);
wherein the fluid circulation system (104) is an ink circulation system (204) configured to supply ink through the inlet line (206) and return undispensed ink through the outlet line (208);
wherein the fluid management device (102) comprises a printhead (202) comprising at least one nozzle (210) fluidically coupled to the inlet line (208) and the outlet line (210) and configured to dispense ink, wherein the printhead (202) defines a pressure-controlled point (212) and wherein the printhead (202) is selectively movable, relative to the ink circulation system (204);
the inkjet printing system (200) further comprising
- the first proportional valve (214) disposed in the inlet line (206) and configured to selectively modulate an inlet fluid pressure in the inlet line (206) between the first proportional valve (214) and the at least one nozzle (210);
- the first pressure sensor (216) between the first proportional valve (214) and the printhead (202) and configured to measure the inlet fluid pressure in the inlet line (206);
- the second proportional valve (218) disposed in the outlet line (208) and configured to selectively modulate an outlet fluid pressure in the outlet line (208) between the at least one nozzle (210) and the second proportional valve (218);
- the second pressure sensor (220) between the printhead (202) and the second proportional valve (218) and configured to measure the outlet fluid pressure in the outlet line (208); and
- the controller (222), operably coupled to the first proportional valve (214), the first pressure sensor (216), the second proportional valve (218), the second pressure sensor (220), and the printhead (202), wherein the controller (222) is configured to control the first proportional valve (214) so that the inlet fluid pressure is maintained at a target inlet fluid pressure and control the second proportional valve (218) so that the outlet fluid pressure is maintained at a target outlet fluid pressure and wherein the controller (222) is configured to control the at least one nozzle (210) to selectively dispense ink onto a surface (201).

15. The inkjet printing system (200) of claim 14, wherein:
the first proportional valve (214) is disposed in the inlet line (206) immediately adjacent to the printhead (202); and
the second proportional valve (218) is disposed in the outlet line (208) immediately adjacent to the printhead (202).

16. The inkjet printing system (200) of claim 14 or 15, wherein the printhead (202) is a piezoelectric-style printhead.

17. The system (100) any one of claims 1-13 or the inkjet printing system (200) of any one of claims 14-16, wherein the first proportional valve (114, 214) and the second proportional valve (118, 218) are actuatable independently of each other.

18. A method (300) for dynamically controlling fluid pressure within a fluid flow circuit, the method (300) comprising:
determining (302) a target inlet fluid pressure in an inlet line (106, 206) supplying a working fluid to a fluid management device (102);
determining (304) a target outlet fluid pressure in an outlet line (108, 208) returning working fluid from the fluid management device (102) based on a desired average fluid pressure of the working fluid at the fluid management device (102) and a desired fluid flow rate at the fluid management device (102);
selectively operating a pump (124) to both supply the working fluid to the inlet line (106, 206) and return returned working fluid from the outlet line (108, 208);
controlling (306) an inlet fluid pressure to maintain the target inlet fluid pressure by actuating a first proportional valve, wherein the inlet fluid pressure is measured by a first pressure sensor; and
controlling (308) an outlet fluid pressure to maintain the target outlet fluid pressure by actuating a second proportional valve, wherein the outlet fluid pressure is measured by a second pressure sensor.

## Patentansprüche

1. System (100, 200) zur dynamischen Steuerung des Flüssigkeitsdrucks innerhalb eines Flüssigkeitsstromkreises, wobei das System umfasst:
eine Vorlaufleitung (106, 206) und eine Rücklaufleitung (108, 208);
ein Flüssigkeitszirkulationssystem (104), das ausgebildet ist, eine Arbeitsflüssigkeit durch die Vorlaufleitung (106, 206) zuzuführen und zurückgeführte Arbeitsflüssigkeit durch die Rücklaufleitung (108, 208) zurückzuführen;
eine Flüssigkeitsmanagementvorrichtung (102), wobei die Flüssigkeitsmanagementvorrichtung (102) einen druckgesteuerten Punkt (112, 212) definiert und wobei die Flüssigkeitsmanagementvorrichtung (102) relativ zu dem Flüssigkeitszirkulationssystem (104) wahlweise bewegbar ist;
ein erstes Proportionalventil (114, 214), das in der Vorlaufleitung (106, 206) angeordnet und dazu ausgebildet ist, einen Einlassflüssigkeitsdruck in der Vorlaufleitung (106, 206) zwischen dem ersten Proportionalventil (114, 214) und der Flüssigkeitsmanagementvorrichtung (102) wahlweise zu modulieren;
ein erster Drucksensor (116, 216) zwischen dem ersten Proportionalventil (114, 214) und der Flüssigkeitsmanagementvorrichtung (102), und der dazu ausgebildet ist, den Einlassflüssigkeitsdruck in der Vorlaufleitung (106, 206) zu messen;
ein zweites Proportionalventil (118, 218), das in der Rücklaufleitung (108, 208) angeordnet und dazu ausgebildet ist, einen Auslassflüssigkeitsdruck in der Rücklaufleitung (108, 208) zwischen der Flüssigkeitsmanagementvorrichtung (102) und dem zweiten Proportionalventil (118, 218) wahlweise zu modulieren;
ein zweiter Drucksensor (120, 220) zwischen der Flüssigkeitsmanagementvorrichtung (102) und dem zweiten Proportionalventil (118, 218), und der dazu ausgebildet ist, den Auslassflüssigkeitsdruck in der Rücklaufleitung (108, 208) zu messen; und
eine Steuereinheit (122, 222), die betriebsfähig mit dem ersten Proportionalventil (114, 214), dem ersten Drucksensor (116, 216), dem zweiten Proportionalventil (118, 218) und dem zweiten Drucksensor (120, 220) verbunden ist, wobei die Steuereinheit (122, 222) dazu ausgebildet ist, das erste Proportionalventil (114, 214) so zu steuern, dass der Einlassflüssigkeitsdruck auf einem Ziel-Einlassflüssigkeitsdruck gehalten wird, und das zweite Proportionalventil (118, 218) so zu steuern, dass der Auslassflüssigkeitsdruck auf einem Ziel-Auslassflüssigkeitsdruck gehalten wird,
wobei das Flüssigkeitszirkulationssystem (104) weiter eine Pumpe (124) umfasst, die wahlweise betreibbar ist, um sowohl die Arbeitsflüssigkeit der Vorlaufleitung (106, 206) zuzuführen als auch zurückgeführte Arbeitsflüssigkeit aus der Rücklaufleitung (108, 208) zurückzuführen.

2. System (100, 200) nach Anspruch 1, wobei jedes von dem ersten Proportionalventil (114, 214) und dem zweiten Proportionalventil (118, 218) ein direktbetätigtes Proportionalventil ist.

3. System (100, 200) nach Anspruch 1 oder 2, wobei der Flüssigkeitsdruck innerhalb des Flüssigkeitsstromkreises nicht mehr als 50 Pfund pro Quadratzoll (PSI) beträgt.

4. System (100, 200) nach einem der Ansprüche 1-3, wobei das System (100, 200) dazu ausgebildet ist, Trägheitseffekte und hydrostatische Druckhöhe automatisch zu kompensieren.

5. System (100, 200) nach einem der Ansprüche 1-4, wobei die Arbeitsflüssigkeit eine inkompressible Flüssigkeit ist.

6. System (100, 200) nach einem der Ansprüche 1-5, wobei die Flüssigkeitsmanagementvorrichtung (102) mindestens eine Düse (110, 210) umfasst, die mit der Vorlaufleitung (106, 206) und der Rücklaufleitung (108, 208) fluidisch gekoppelt ist und ausgebildet ist, die Arbeitsflüssigkeit abzugeben.

7. System (100, 200) nach einem der Ansprüche 1-6, wobei
die Arbeitsflüssigkeit eine Tinte ist; und
die Flüssigkeitsmanagementvorrichtung (102) einen Druckkopf (202) umfasst, der dazu ausgebildet ist, die Tinte abzugeben.

8. System (100, 200) nach einem der Ansprüche 1-7, wobei das Flüssigkeitszirkulationssystem (104) weiter einen Vorratsbehälter (126) zum Zuführen der Arbeitsflüssigkeit und einen Rücklaufbehälter (128) zum Speichern zurückgeführter Arbeitsflüssigkeit umfasst.

9. System (100, 200) nach einem der Ansprüche 1-8, weiter umfassend eine Vielzahl von Flüssigkeitsmanagementvorrichtungen (102), eine Vielzahl von Vorlaufleitungen (106, 206), eine Vielzahl von Rücklaufleitungen (108, 208), eine Vielzahl von ersten Proportionalventilen (114, 214), eine Vielzahl von zweiten Proportionalventilen (118, 218), eine Vielzahl von druckgesteuerten Punkten (112, 212), eine Vielzahl von ersten Drucksensoren (116, 216) und eine Vielzahl von zweiten Drucksensoren (120, 220), wobei:
jede der Vielzahl von Flüssigkeitsmanagementvorrichtungen (102) mit einer entsprechenden der Vielzahl von Vorlaufleitungen (106, 206) und einer entsprechenden der Vielzahl von Rücklaufleitungen (108, 208) gekoppelt ist;
jede der Vielzahl von Flüssigkeitsmanagementvorrichtungen (102) einen entsprechenden der Vielzahl von druckgesteuerten Punkten (112, 212) definiert und jeder der druckgesteuerten Punkte (112, 212) sich von jedem anderen der druckgesteuerten Punkte (112, 212) unterscheidet;
jedes der ersten Proportionalventile (114, 214) in einer entsprechenden der Vielzahl von Vorlaufleitungen (106, 206) angeordnet ist und jeder der Vielzahl von ersten Drucksensoren (116, 216) zwischen einem entsprechenden der Vielzahl von ersten Proportionalventilen (114, 214) und einer entsprechenden der Vielzahl von Flüssigkeitsmanagementvorrichtungen (102) liegt; und
jedes der zweiten Proportionalventile (118, 218) in einer entsprechenden der Vielzahl von Rücklaufleitungen (108, 208) angeordnet ist und jeder der Vielzahl von zweiten Drucksensoren (120, 220) zwischen einer entsprechenden der Vielzahl von Flüssigkeitsmanagementvorrichtungen (102) und einem entsprechenden der Vielzahl von zweiten Proportionalventilen (118, 218) liegt.

10. System (100, 200) nach Anspruch 9, wobei die Vielzahl von Flüssigkeitsmanagementvorrichtungen (102) unabhängig und wahlweise relativ zu dem Flüssigkeitszirkulationssystem (104) bewegbar ist.

11. System (100, 200) nach einem der vorstehenden Ansprüche, wobei:
das erste Proportionalventil (114, 214) dazu ausgebildet ist, den Einlassflüssigkeitsdruck, basierend auf einer Rückmeldung von dem ersten Drucksensor (116, 216), zu modulieren; und
das zweite Proportionalventil (118, 218) dazu ausgebildet ist, den Auslassflüssigkeitsdruck, basierend auf einer Rückmeldung von dem zweiten Drucksensor (120, 220), zu modulieren.

12. System (100, 200) nach einem der vorstehenden Ansprüche, wobei die Steuereinheit (122, 222) dazu ausgebildet ist, das erste Proportionalventil (114, 214) und das zweite Proportionalventil (118, 218) anzupassen, um einen gewünschten durchschnittlichen Flüssigkeitsdruck und eine gewünschte Durchflussrate zwischen dem Einlassflüssigkeitsdruck und dem Auslassflüssigkeitsdruck der Arbeitsflüssigkeit an der Flüssigkeitsmanagementvorrichtung (102) aufrechtzuerhalten.

13. System (100, 200) nach einem der vorstehenden Ansprüche, wobei:
das erste Proportionalventil (114, 214) in der Vorlaufleitung (106, 206) unmittelbar benachbart zu der Flüssigkeitsmanagementvorrichtung (102) angeordnet ist; und
das zweite Proportionalventil (118, 218) in der Rücklaufleitung (108, 208) unmittelbar benachbart zu der Flüssigkeitsmanagementvorrichtung (102) angeordnet ist.

14. System nach einem der vorstehenden Ansprüche, wobei das System ein Tintenstrahldrucksystem (200) ist, umfassend:
die Vorlaufleitung (206) und die Rücklaufleitung (208);
wobei das Flüssigkeitszirkulationssystem (104) ein Tintenzirkulationssystem (204) ist, das dazu ausgebildet ist, Tinte durch die Vorlaufleitung (206) zuzuführen und nicht abgegebene Tinte durch die Rücklaufleitung (208) zurückzuführen;
wobei die Flüssigkeitsmanagementvorrichtung (102) einen Druckkopf (202) umfasst, der mindestens eine Düse (210) umfasst, die mit der Vorlaufleitung (208) und der Rücklaufleitung (210) fluidisch gekoppelt ist und ausgebildet ist, Tinte abzugeben, wobei der Druckkopf (202) einen druckgesteuerten Punkt (212) definiert und wobei der Druckkopf (202) relativ zu dem Tintenzirkulationssystem (204) wahlweise bewegbar ist;
wobei das Tintenstrahldrucksystem (200) weiter umfasst
- das erste Proportionalventil (214), das in der Vorlaufleitung (206) angeordnet und dazu ausgebildet ist, einen Einlassflüssigkeitsdruck in der Vorlaufleitung (206) zwischen dem ersten Proportionalventil (214) und der mindestens einen Düse (210) wahlweise zu modulieren;
- den ersten Drucksensor (216) zwischen dem ersten Proportionalventil (214) und dem Druckkopf (202), und der dazu ausgebildet ist, den Einlassflüssigkeitsdruck in der Vorlaufleitung (206) zu messen;
- das zweite Proportionalventil (218), das in der Rücklaufleitung (208) angeordnet und dazu ausgebildet ist, einen Auslassflüssigkeitsdruck in der Rücklaufleitung (208) zwischen der mindestens einen Düse (210) und dem zweiten Proportionalventil (218) wahlweise zu modulieren;
- den zweiten Drucksensor (220) zwischen dem Druckkopf (202) und dem zweiten Proportionalventil (218), und der dazu ausgebildet ist, den Auslassflüssigkeitsdruck in der Rücklaufleitung (208) zu messen; und
- die Steuereinheit (222), die betriebsfähig mit dem ersten Proportionalventil (214), dem ersten Drucksensor (216), dem zweiten Proportionalventil (218), dem zweiten Drucksensor (220) und dem Druckkopf (202) verbunden ist, wobei die Steuereinheit (222) ausgebildet ist, das erste Proportionalventil (214) so zu steuern, dass der Einlassflüssigkeitsdruck auf einem Ziel-Einlassflüssigkeitsdruck gehalten wird, und das zweite Proportionalventil (218) so zu steuern, dass der Auslassflüssigkeitsdruck auf einem Ziel-Auslassflüssigkeitsdruck gehalten wird, und wobei die Steuereinheit (222) ausgebildet ist, die mindestens eine Düse (210) so zu steuern, dass sie Tinte wahlweise auf eine Oberfläche (201) abgibt.

15. Tintenstrahldrucksystem (200) nach Anspruch 14, wobei:
das erste Proportionalventil (214) in der Vorlaufleitung (206) unmittelbar benachbart zu dem Druckkopf (202) angeordnet ist; und
das zweite Proportionalventil (218) in der Rücklaufleitung (208) unmittelbar benachbart zu dem Druckkopf (202) angeordnet ist.

16. Tintenstrahldrucksystem (200) nach Anspruch 14 oder 15, wobei der Druckkopf (202) ein Druckkopf vom piezoelektrischen Typ ist.

17. System (100) nach einem der Ansprüche 1-13 oder Tintenstrahldrucksystem (200) nach einem der Ansprüche 14-16, wobei das erste Proportionalventil (114, 214) und das zweite Proportionalventil (118, 218) unabhängig voneinander betätigbar sind.

18. Verfahren (300) zum dynamischen Steuern des Flüssigkeitsdrucks innerhalb eines Flüssigkeitsstromkreises, wobei das Verfahren (300) umfasst:
Bestimmen (302) eines Ziel-Einlassflüssigkeitsdrucks in einer Vorlaufleitung (106, 206), die eine Arbeitsflüssigkeit einer Flüssigkeitsmanagementvorrichtung (102) zuführt;
Bestimmen (304) eines Ziel-Auslassflüssigkeitsdrucks in einer Rücklaufleitung (108, 208), die Arbeitsflüssigkeit von der Flüssigkeitsmanagementvorrichtung (102) zurückführt, basierend auf einem gewünschten durchschnittlichen Flüssigkeitsdruck der Arbeitsflüssigkeit an der Flüssigkeitsmanagementvorrichtung (102) und einer gewünschten Durchflussrate an der Flüssigkeitsmanagementvorrichtung (102);
wahlweises Betreiben einer Pumpe (124), um sowohl die Arbeitsflüssigkeit der Vorlaufleitung (106, 206) zuzuführen als auch zurückgeführte Arbeitsflüssigkeit aus der Rücklaufleitung (108, 208) zurückzuführen;
Steuern (306) eines Einlassflüssigkeitsdrucks, um den Ziel-Einlassflüssigkeitsdruck durch Betätigen eines ersten Proportionalventils aufrechtzuerhalten, wobei der Einlassflüssigkeitsdruck durch einen ersten Drucksensor gemessen wird; und
Steuern (308) eines Auslassflüssigkeitsdrucks, um den Ziel-Auslassflüssigkeitsdruck durch Betätigen eines zweiten Proportionalventils aufrechtzuerhalten, wobei der Auslassflüssigkeitsdruck durch einen zweiten Drucksensor gemessen wird.

## Revendications

1. Système (100, 200) de commande dynamique de pression de fluide à l'intérieur d'un circuit d'écoulement de fluide, le système comprenant :
une conduite d'entrée (106, 206) et une conduite de sortie (108, 208) ;
un système (104) de circulation de fluide configuré pour fournir un fluide de travail à travers la conduite d'entrée (106, 206) et renvoyer du fluide de travail renvoyé à travers la conduite de sortie (108, 208) ;
un dispositif (102) de gestion de fluide, dans lequel le dispositif (102) de gestion de fluide définit un point à pression commandée (112, 212) et dans lequel le dispositif (102) de gestion de fluide est mobile sélectivement, par rapport au système (104) de circulation de fluide ;
une première vanne proportionnelle (114, 214) disposée dans la conduite d'entrée (106, 206) et configurée pour moduler sélectivement une pression de fluide d'entrée dans la conduite d'entrée (106, 206) entre la première vanne proportionnelle (114, 214) et le dispositif (102) de gestion de fluide ;
un premier capteur de pression (116, 216) entre la première vanne proportionnelle (114, 214) et le dispositif (102) de gestion de fluide et configuré pour mesurer la pression de fluide d'entrée dans la conduite d'entrée (106, 206) ;
une deuxième vanne proportionnelle (118, 218) disposée dans la conduite de sortie (108, 208) et configurée pour moduler sélectivement une pression de fluide de sortie dans la conduite de sortie (108, 208) entre le dispositif (102) de gestion de fluide et la deuxième vanne proportionnelle (118, 218) ;
un deuxième capteur de pression (120, 220) entre le dispositif (102) de gestion de fluide et la deuxième vanne proportionnelle (118, 218) et configuré pour mesurer la pression de fluide de sortie dans la conduite de sortie (108, 208) ; et
un dispositif de commande (122, 222) couplé fonctionnellement à la première vanne proportionnelle (114, 214), au premier capteur de pression (116, 216), à la deuxième vanne proportionnelle (118, 218), et au deuxième capteur de pression (120, 220), dans lequel le dispositif de commande (122, 222) est configuré pour commander la première vanne proportionnelle (114, 214) de sorte que la pression de fluide d'entrée soit maintenue à une pression de fluide d'entrée cible et commander la deuxième vanne proportionnelle (118, 218) de sorte que la pression de fluide de sortie soit maintenue à une pression de fluide de sortie cible,
dans lequel le système (104) de circulation de fluide comprend en outre une pompe (124) qui peut fonctionner sélectivement pour à la fois fournir le fluide de travail à la conduite d'entrée (106, 206) et renvoyer du fluide de travail renvoyé depuis la conduite de sortie (108, 208).

2. Système (100, 200) selon la revendication 1, dans lequel chacune de la première vanne proportionnelle (114, 214) et de la deuxième vanne proportionnelle (118, 218) est une vanne proportionnelle à action directe.

3. Système (100, 200) selon la revendication 1 ou la revendication 2, dans lequel la pression de fluide à l'intérieur du circuit d'écoulement de fluide n'est pas supérieure à 50 livres par pouce carré (PSI).

4. Système (100, 200) selon l'une quelconque des revendications 1 à 3, dans lequel le système (100, 200) est configuré pour compenser automatiquement des effets inertiels et une charge hydraulique.

5. Système (100, 200) selon l'une quelconque des revendications 1 à 4, dans lequel le fluide de travail est un fluide incompressible.

6. Système (100, 200) selon l'une quelconque des revendications 1 à 5, dans lequel le dispositif (102) de gestion de fluide comprend au moins une buse (110, 210) couplée fluidiquement à la conduite d'entrée (106, 206) et la conduite de sortie (108, 208) et configurée pour délivrer le fluide de travail.

7. Système (100, 200) selon l'une quelconque des revendications 1 à 6, dans lequel
le fluide de travail est une encre ; et
le dispositif (102) de gestion de fluide comprend une tête d'impression (202) configurée pour délivrer l'encre.

8. Système (100, 200) selon l'une quelconque des revendications 1 à 7, dans lequel le système (104) de circulation de fluide comprend en outre un réservoir d'alimentation (126) pour fournir le fluide de travail et un réservoir de retour (128) pour stocker du fluide de travail renvoyé.

9. Système (100, 200) selon l'une quelconque des revendications 1 à 8, comprenant en outre une pluralité de dispositifs (102) de gestion de fluide, une pluralité de conduites d'entrée (106, 206), une pluralité de conduites de sortie (108, 208), une pluralité de premières vannes proportionnelles (114, 214), une pluralité de deuxièmes vannes proportionnelles (118, 218), une pluralité de points à pression commandée (112, 212), une pluralité de premiers capteurs de pression (116, 216), et une pluralité de deuxièmes capteurs de pression (120, 220), dans lequel :
chacun de la pluralité de dispositifs (102) de gestion de fluide est couplé à une conduite d'entrée correspondante de la pluralité de conduites d'entrée (106, 206) et une conduite de sortie correspondante de la pluralité de conduites de sortie (108, 208) ;
chacun de la pluralité de dispositifs (102) de gestion de fluide définit un point à pression commandée correspondant de la pluralité de points à pression commandée (112, 212) et chacun des points à pression commandée (112, 212) est différent d'un quelconque autre des points à pression commandée (112, 212) ;
chacune des premières vannes proportionnelles (114, 214) est disposée dans une conduite d'entrée correspondante de la pluralité de conduites d'entrée (106, 206) et chacun de la pluralité de premiers capteurs de pression (116, 216) est entre une première vanne proportionnelle correspondante de la pluralité de premières vannes proportionnelles (114, 214) et un dispositif de gestion de fluide correspondant de la pluralité de dispositifs (102) de gestion de fluide ; et
chacune des deuxièmes vannes proportionnelles (118, 218) est disposée dans une conduite de sortie correspondante de la pluralité de conduites de sortie (108, 208) et chacun de la pluralité de deuxièmes capteurs de pression (120, 220) est entre un dispositif de gestion de fluide correspondant de la pluralité de dispositifs (102) de gestion de fluide et une deuxième vanne proportionnelle correspondante de la pluralité de deuxièmes vannes proportionnelles (118, 218).

10. Système (100, 200) selon la revendication 9, dans lequel la pluralité de dispositifs (102) de gestion de fluide sont mobiles indépendamment et sélectivement les uns des autres par rapport au système (104) de circulation de fluide.

11. Système (100, 200) selon l'une quelconque des revendications précédentes, dans lequel :
la première vanne proportionnelle (114, 214) est configurée pour moduler la pression de fluide d'entrée sur la base d'une rétroaction du premier capteur de pression (116, 216) ; et
la deuxième vanne proportionnelle (118, 218) est configurée pour moduler la pression de fluide de sortie sur la base d'une rétroaction du deuxième capteur de pression (120, 220).

12. Système (100, 200) selon l'une quelconque des revendications précédentes, dans lequel le dispositif de commande (122, 222) est configuré pour ajuster la première vanne proportionnelle (114, 214) et la deuxième vanne proportionnelle (118, 218) afin de maintenir une pression de fluide moyenne souhaitée et un débit de fluide souhaité, entre la pression de fluide d'entrée et la pression de fluide de sortie, du fluide de travail au niveau du dispositif (102) de gestion de fluide.

13. Système (100, 200) selon l'une quelconque des revendications précédentes, dans lequel :
la première vanne proportionnelle (114, 214) est disposée dans la conduite d'entrée (106, 206) immédiatement adjacente au dispositif (102) de gestion de fluide ; et
la deuxième vanne proportionnelle (118, 218) est disposée dans la conduite de sortie (108, 208) immédiatement adjacente au dispositif (102) de gestion de fluide.

14. Système selon l'une quelconque des revendications précédentes, dans lequel le système est un système (200) d'impression à jet d'encre comprenant :
la conduite d'entrée (206) et la conduite de sortie (208) ;
dans lequel le système (104) de circulation de fluide est un système (204) de circulation d'encre configuré pour fournir de l'encre à travers la conduite d'entrée (206) et renvoyer de l'encre non délivrée à travers la conduite de sortie (208) ;
dans lequel le dispositif (102) de gestion de fluide comprend une tête d'impression (202) comprenant au moins une buse (210) couplée fluidiquement à la conduite d'entrée (208) et la conduite de sortie (210) et configurée pour délivrer de l'encre, dans lequel la tête d'impression (202) définit un point à pression commandée (212) et dans lequel la tête d'impression (202) est mobile sélectivement, par rapport au système (204) de circulation d'encre ;
le système (200) d'impression à jet d'encre comprenant en outre
- la première vanne proportionnelle (214) disposée dans la conduite d'entrée (206) et configurée pour moduler sélectivement une pression de fluide d'entrée dans la conduite d'entrée (206) entre la première vanne proportionnelle (214) et la au moins une buse (210) ;
- le premier capteur de pression (216) entre la première vanne proportionnelle (214) et la tête d'impression (202) et configuré pour mesurer la pression de fluide d'entrée dans la conduite d'entrée (206) ;
- la deuxième vanne proportionnelle (218) disposée dans la conduite de sortie (208) et configurée pour moduler sélectivement une pression de fluide de sortie dans la conduite de sortie (208) entre la au moins une buse (210) et la deuxième vanne proportionnelle (218) ;
- le deuxième capteur de pression (220) entre la tête d'impression (202) et la deuxième vanne proportionnelle (218) et configuré pour mesurer la pression de fluide de sortie dans la conduite de sortie (208) ; et
- le dispositif de commande (222), couplé fonctionnellement à la première vanne proportionnelle (214), au premier capteur de pression (216), à la deuxième vanne proportionnelle (218), au deuxième capteur de pression (220), et à la tête d'impression (202), dans lequel le dispositif de commande (222) est configuré pour commander la première vanne proportionnelle (214) de sorte que la pression de fluide d'entrée soit maintenue à une pression de fluide d'entrée cible et commander la deuxième vanne proportionnelle (218) de sorte que la pression de fluide de sortie soit maintenue à une pression de fluide de sortie cible et dans lequel le dispositif de commande (222) est configuré pour commander la au moins une buse (210) pour délivrer sélectivement de l'encre sur une surface (201).

15. Système (200) d'impression à jet d'encre selon la revendication 14, dans lequel :
la première vanne proportionnelle (214) est disposée dans la conduite d'entrée (206) immédiatement adjacente à la tête d'impression (202) ; et
la deuxième vanne proportionnelle (218) est disposée dans la conduite de sortie (208) immédiatement adjacente à la tête d'impression (202).

16. Système (200) d'impression à jet d'encre selon la revendication 14 ou la revendication 15, dans lequel la tête d'impression (202) est une tête d'impression de type piézoélectrique.

17. Système (100) selon l'une quelconque des revendications 1 à 13 ou système (200) d'impression à jet d'encre selon l'une quelconque des revendications 14 à 16, dans lequel la première vanne proportionnelle (114, 214) et la deuxième vanne proportionnelle (118, 218) sont indépendamment actionnables l'une de l'autre.

18. Procédé (300) de commande dynamique de pression de fluide à l'intérieur d'un circuit d'écoulement de fluide, le procédé (300) comprenant :
la détermination (302) d'une pression de fluide d'entrée cible dans une conduite d'entrée (106, 206) fournissant un fluide de travail à un dispositif (102) de gestion de fluide ;
la détermination (304) d'une pression de fluide de sortie cible dans une conduite de sortie (108, 208) renvoyant du fluide de travail depuis le dispositif (102) de gestion de fluide sur la base d'une pression de fluide moyenne souhaitée du fluide de travail au niveau du dispositif (102) de gestion de fluide et d'un débit de fluide souhaité au niveau du dispositif (102) de gestion de fluide ;
le fonctionnement sélectif d'une pompe (124) pour à la fois fournir le fluide de travail à la conduite d'entrée (106, 206) et renvoyer du fluide de travail renvoyé depuis la conduite de sortie (108, 208) ;
la commande (306) d'une pression de fluide d'entrée pour maintenir la pression de fluide d'entrée cible en actionnant une première vanne proportionnelle, dans lequel la pression de fluide d'entrée est mesurée par un premier capteur de pression ; et
la commande (308) d'une pression de fluide de sortie pour maintenir la pression de fluide de sortie cible en actionnant une deuxième vanne proportionnelle, dans lequel la pression de fluide de sortie est mesurée par un deuxième capteur de pression.
